# EUROPEAN PATENT APPLICATION

(11) **EP 4 567 700 A1**
(43) Date of publication of application: **11.06.2025**
(21) Application number: 24215298.1
(22) Date of filing: 26.11.2024
(51) Int. Cl.: G06Q 10/20, G06Q 50/06, G06T 19/00, G06V 20/20

(54) **LOAD CENTER DEVICE IDENTIFICATION AND LOCATION**

(30) Priority: 07.12.2023 US 202318532928
(71) Applicant: Schneider Electric USA, Inc., Andover, MA 01810 (US)
(72) Inventor: Jakupi, Andi, Andover, MA, 01810 (US)
(74) Representative: Manitz Finsterwald Patent- und Rechtsanwaltspartnerschaft mbB

(57) **Abstract**

Systems/methods for identifying devices in a load center and recording their respective slot locations provide a load center mapping app that performs automatic device identification using a digital image of the load center. The load center mapping app applies digital image processing algorithms to the digital image to outline a contour of each device, then employs optical character recognition (OCR) to each device to recognize the identifier for that device. The mapping app thereafter maps the identifier for each device to the slot number for the device, and stores the mapping information a virtual load center table that can be used to generate an augmented load center. Such a mapping app is particularly useful in identifying devices that have an electronic label or similar indicia containing an identifier that indicates which branch is connected to that device, although other devices without an electronic label may also be identified and mapped.

## Description

### TECHNICAL FIELD

The present disclosure relates to detection of circuit breakers, relays, and other devices in a load center, and particularly to systems and methods for automatically identifying the devices in a load center and determining the locations thereof in the load center.

### BACKGROUND

A load center in a home or building refers to the main point of distribution for electrical power throughout the home or building. In most homes and buildings, the load center is an electrical distribution panel housed within a metal enclosure mounted on a wall in a utility closet, garage, and the like. The load center typically has a series of slots in which circuit protection devices, such as circuit breakers, relays, surge protectors, and the like, may be installed. Each of these load center devices provides power to and fault protection for a separate branch of power lines in the home or building (e.g., kitchen, master bedroom, game room, etc.). This prevents a fault occurring in one branch from affecting the power supplied to other branches.

For existing homes and buildings, a technician typically installs the load center devices in the load center. This involves connecting each load center device to its intended branch and mounting the device in its intended slot in the load center. During the installation process, the installer identifies each load center device by placing a sticker or label next to the device that indicates which branch is connected to that device. The sticker or label lets a homeowner or building manager quickly determine which of the devices in the load center is implicated when a fault occurs later in one of the branches. However, the process of manually identifying and labeling each load center device in the load center can be a slow and cumbersome process for technicians.

Accordingly, a need exists for a way to automatically identify the devices in a load center and record their slot locations in the load center.

### SUMMARY

Embodiments of the present disclosure provide systems and methods that can automatically identify various devices in a load center and record their respective slot locations in the load center. The systems and methods provide a load center mapping app that performs automatic device identification and slot location using a digital image of the load center containing the devices in their intended slots. This load center mapping app is particularly useful in identifying load center devices that have an electronic label or similar indicia. The electronic label or similar indicia may display an identifier that indicates which branch is connected to that device, or the identifier may contain a code, such as a barcode or a QR (Quick Response) code, containing device specific installation information for the device. The load center mapping app may then communicate the barcode or QR code to a device installation and commissioning app for use in automatically programming the device to display the branch connected to that device, thereby greatly simplifying the commissioning of such load center devices. Other load center devices without an electronic label may also be identified by the load center mapping app.

In some embodiments, the load center mapping app operates by applying digital image processing algorithms to the digital image to outline a contour for each device, then employing optical character recognition (OCR) to each device to recognize the identifier for that device. The image processing creates a virtual grid on the digital image based on the contour outlines for the devices, with each grid slot corresponding to a device based on the contour outlines for the devices. The load center mapping app then maps a slot number to each device based on the numbering scheme used in the load center. The load center mapping app thereafter maps the identifier for each device to the slot number for the device, and stores the mapping information to a virtual load center table.

From the virtual load center table, the load center mapping app generates and displays an augmented load center that shows the digital image visually augmented or overlaid with the device identification for each device and, optionally, the slot number for that device. This provides a real-world view of the load center showing the actual devices installed in the load center and their identifications and slot numbers. Such an augmented load center is particularly useful in applications that facilitate load center installation and commissioning, such as eSetup from Schneider Electric, as well as applications that monitor load center energy usage, such as Wiser Monitor, also from Schneider Electric.

In general, in one aspect, embodiments of the present disclosure relate to an electronic device for generating an augmented load center. The electronic device comprises a processor, a display unit coupled to the processor, and a storage unit accessible by the processor. The storage unit stores computer-readable instructions thereon that, when executed by the processor, cause the processor to, among other things, obtain a digital image of a load center having load center devices installed in the load center, the digital image of the load center showing the load center devices located within slots in the load center. The computer-readable instructions additionally cause the processor to process the digital image of the load center to recognize individual load center devices located within the slots of the load center. The computer-readable instructions also cause the processor to process each recognized load center device in the digital image to extract an identifier for the recognized load center device. The computer-readable instructions further cause the processor to display on the display unit an augmented image of the load center showing the load center devices located within the slots in the load center, the augmented image overlaying each load center device with the identifier for the load center device.

In general, in another aspect, embodiments of the present disclosure relate to a method of generating an augmented load center in an electronic device. The method comprises, among other things, obtaining a digital image of a load center having load center devices installed in the load center, the digital image of the load center showing the load center devices located within slots in the load center. The method additionally comprises processing the digital image of the load center to recognize individual load center devices located within the slots of the load center, and processing each recognized load center device in the digital image to extract an identifier for the recognized load center device. The method further comprises displaying an augmented image of the load center showing the load center devices located within the slots in the load center, the augmented image overlaying each load center device with the identifier for the load center device.

In general, in yet another aspect, embodiments of the present disclosure relate to a system for generating an augmented load center. The system comprises an external system, the external system hosting at least one of an installation and commissioning resource and/or an energy usage monitoring resource. The system also comprises a load center having load center devices installed therein, the load center devices located within slots in the load center, the load center devices communicatively coupled to the external system. The system further comprises an electronic device communicatively coupled to the external system, the electronic device configured to access at least one of the installation and commissioning resource and/or the energy usage monitoring resource. The electronic device is configured to obtain a digital image of a load center having load center devices installed in the load center, the digital image of the load center showing the load center devices installed within slots in the load center. The electronic device is additionally configured to process the digital image of the load center to recognize individual load center devices located within the slots of the load center, and process each recognized load center device in the digital image to extract an identifier for the recognized load center device. The electronic device is also configured to display on the display unit an augmented image of the load center showing the load center devices located within the slots in the load center, the augmented image overlaying each load center device with the identifier for the load center device. The electronic device is further configured to communicate the augmented image of the load center and the identifier for each load center device to the at least one of the installation and commissioning resource and/or the energy usage monitoring resource.

### BRIEF DESCRIPTION OF THE DRAWINGS

FIG. 1 illustrates an exemplary system for generating an augmented load center in accordance with embodiments of the present disclosure;
FIG. 2 illustrates an exemplary device for generating an augmented load center in accordance with embodiments of the present disclosure;
FIG. 3 illustrates an exemplary augmented load center in accordance with embodiments of the present disclosure;
FIG. 4 illustrates an exemplary method for identifying load center devices in a load center in accordance with embodiments of the present disclosure;
FIG. 5 illustrates an exemplary method for acquiring an image of a load center in accordance with embodiments of the present disclosure;
FIG. 6 illustrates an exemplary method for recognizing devices in an image of a load center in accordance with embodiments of the present disclosure;
FIG. 7 illustrates an exemplary method for extracting device information from an image of a load center in accordance with embodiments of the present disclosure; and
FIG. 8 illustrates an alternative method for identifying load center devices in a load center in in accordance with embodiments of the present disclosure.

### DETAILED DESCRIPTION

This description and the accompanying drawings illustrate exemplary embodiments of the present disclosure and should not be taken as limiting, with the claims defining the scope of the present disclosure, including equivalents. Various mechanical, compositional, structural, electrical, and operational changes may be made without departing from the scope of this description and the claims, including equivalents. In some instances, well-known structures and techniques have not been shown or described in detail so as not to obscure the disclosure. Further, elements and their associated aspects that are described in detail with reference to one embodiment may, whenever practical, be included in other embodiments in which they are not specifically shown or described. For example, if an element is described in detail with reference to one embodiment and is not described with reference to a second embodiment, the element may nevertheless be claimed as included in the second embodiment.

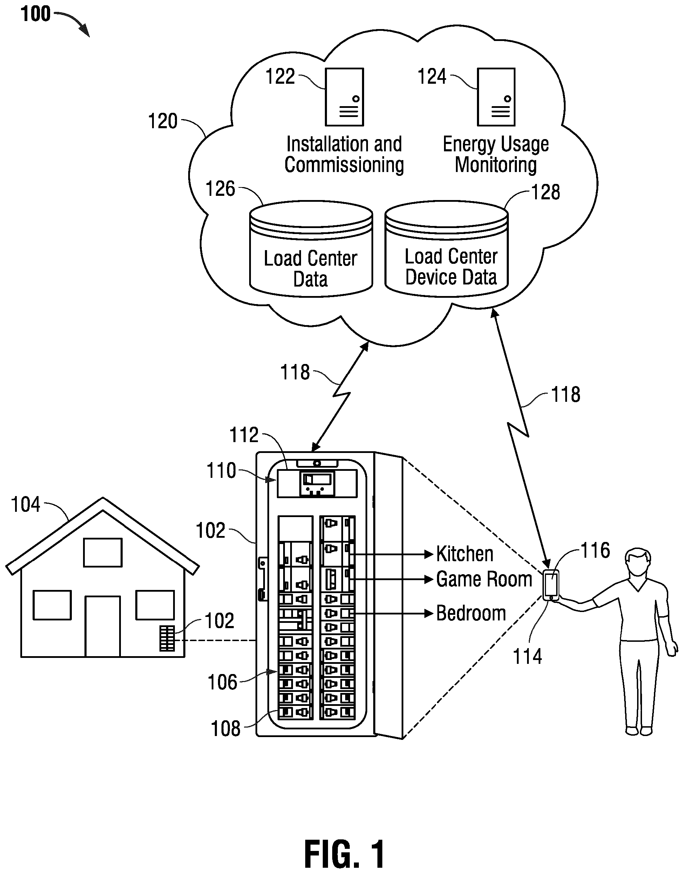

Referring now to FIG. 1, a system 100 is shown for automatically identifying devices in a load center 102 and generating an augmented load center in accordance with embodiments of the present disclosure. The load center 102 in this example resembles a typical electrical panel for a home 104 or other residential dwelling insofar as there is a series of slots 106, generally arranged in two side-by-side columns, in which various load center devices 108 may be installed. These load center devices 108 may include circuit breakers, relays, surge protectors, and other electrical switching and protection devices. A main slot 110 is usually provided near the top of the load center 102 and reserved for receiving a main breaker 112 that can interrupt power to the load center 102 itself in the event of major electrical failure or fault.

As mentioned previously, each load center device 108 is responsible for supplying power to and providing fault protection for a separate branch or power line in the home 104. For example, one branch may carry power to the kitchen, while another branch may carry power to the game room, and another branch may carry power to the bedroom, and so forth. To this end, an installer who is installing and commissioning the load center devices 108 must identify each load center device 108 according to the branch connected to that device to ensure that the device 108 is correctly identified with the appropriate branch (e.g., kitchen, game room, bedroom, etc.) and correct slot 106. And the installer must somehow record, notate, or otherwise log the identification of the device 108 and the slot in which that device 108 is installed.

In accordance with embodiments of the present disclosure, the system 100 allows the technician to use a mobile device 114 and a load center mapping app 116 thereon to automatically identify the load center devices 108 to create an augmented load center for the load center 102. The load center mapping app 116 uses a digital image of the load center 102 with the various devices 108 installed therein to identify and record the location of the devices 108 in the load center 102. From this image, the load center mapping app 116 can apply digital image processing to locate the devices 108 within the load center 102, and apply optical character recognition (OCR) to determine an identification of each device.

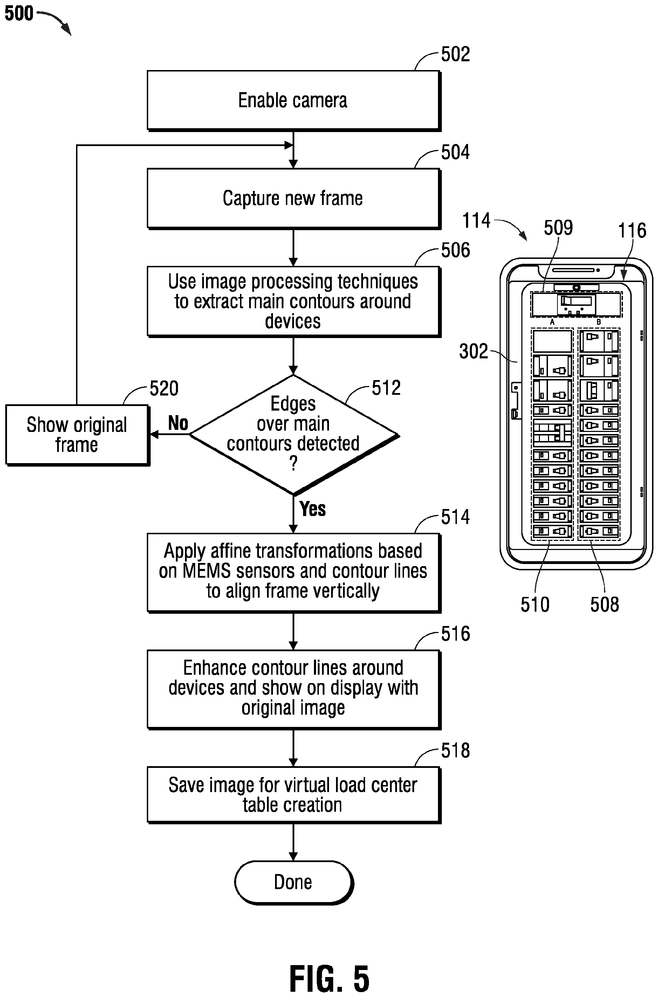

The digital image may be taken using a built-in camera of the mobile device 114, or the image may be downloaded to the mobile device 114, or otherwise obtained from an external source (e.g., another mobile device). Most mobile devices 114 have a multi-frame-per-second (e.g., 24 FPS) digital camera that can be used to capture the digital image. This allows the load center mapping app 116 to quickly process each image frame in the manner discussed further below (see FIG. 5), and determine whether any of the image frames is acceptable for the purposes herein. Alternatively, the installer can take a quick snapshot of the load center 102, visually verify whether one of the image frames is good or retake the snapshot if needed, and save the image frame for further processing by the app 116.

After the image has been captured, the load center mapping app 116 performs image processing to detect the contours of the load center devices 108. To this end, the mobile device 114 should also have sufficient computing capacity to allow the load center mapping app 116 to process the digital image using an image edge-detection and matching algorithm, preferably in real time, as discussed herein. The load center mapping app 116 then creates a virtual grid with grid slots that correspond to the contours of the devices 108 in the digital image. The load center mapping app 116 thereafter applies the virtual grid to the digital image and assigns a slot number to each device 108 in the image based on its location in the load center 102.

Next, for each load center device 108 in the image, the load center mapping app 116 performs text recognition (e.g., OCR) on any device 108 that has a label or other indicia containing an identifier for the device. For example, most communication and control (C&C) breakers have an electronic label that can be programmed with an identifier indicating the branch connected to that breaker (e.g., kitchen, game room, bedroom, etc.). The load center mapping app 116 then compares any text extracted from a load center device 108 against a predefined table of installed load center devices for that load center 102 using an appropriate search algorithm. The predefined installed devices table contains a predefined list of load center devices and the identifier and slot numbers for each device based on the branch connected to the device. This installed devices table serves essentially as a reference list for the load center mapping app 116 to determine whether a particular load center device 108 in the digital image properly belongs in the load center 102. An exemplary installed devices table for a residential dwelling like the home 104 is shown in Table 1 below.

**Table 1: Installed Devices Table**

| Device | Slot # | Assigned Identifier | |
|---|---|---|---|
| C&C Model A | 2 | "Kitchen" | "Ktchn" |
| C&C Model B | 10 | "Game Room" | "Gmrm" |
| C&C Model C | 1 | "Bedroom" | "Bdrm" |
| ... | ... | ... | ... |
| Thermal Model X | 3 | "Bathroom" | "Bthrm" |

In some embodiments, the load center devices and their respective identifiers may be arranged in the installed devices table as a list of devices and assigned identifier for each device. The identifiers may include letters and/or numbers that indicate which branches are connected to the load center devices. In some embodiments, each identifier includes two versions: a full version (e.g., "Kitchen," "Bedroom," "Game Room," etc.), and a shortened or abbreviated version (e.g., "Ktchn," "Gmrm," "Bedrm," etc.). If the load center mapping app 116 finds a match between the text extracted from a load center device 108 and either the full version or the shortened version of an identifier for any device in the installed devices table, then this serves as confirmation of the text extracted from that the load center device 108. A match also confirms that the device 108 properly belongs in the load center 102 and was not mistakenly installed (or programmed). The load center mapping app 116 thereafter maps the slot number for that device 108 to the extracted identifier. This is done for all the load center devices 108 in the digital image that have a label or other indicia containing an identifier from which the load center mapping app 116 can extract text.

In some embodiments, a predefined table of installed load center devices like the one shown in Table 1 may not exist for the load center mapping app 116 to access and use. In that case, the load center mapping app 116 may build a table of installed load center devices like Table 1 as part of the process of recognizing various load center devices 108 installed in the load center 102. Some of these load center devices 108, such as the C&C breakers, may display a text identifier in their display screens, but the text may be abbreviated or truncated due to limitations in the number of characters that can fit in the display screen. In those instances, a predefined reference list of identifiers and corresponding abbreviations (or acronyms) for the load center devices may be provided with the load center mapping app 116, or otherwise made available to the app 116. The load center mapping app 116 can then look up the abbreviated or truncated text identifier in the list to create a predefined table of installed load center devices like Table 1. An exemplary reference list of identifiers and corresponding abbreviations is shown in List 1 below.

**List 1: Reference Identifiers**

| Reference Identifier | |
|---|---|
| "Ktchn" | "Kitchen" |
| "Gmrm" | "Game Room" |
| "Bdrm" | "Bedroom" |
| ... | ... |
| "Bthrm" | "Bathroom" |

Note that although two versions of the identifiers are discussed herein, either the full version or the abbreviated version alone will suffice in some embodiments. In either case, if the text extracted from a load center device 108 does not match any identifier in the installed devices table, then the load center mapping app 116 uses the search algorithm (or a similar algorithm) to identify the closest match from among the identifiers in the table that was not already matched, and maps the slot number for that load center device 108 to the identifier that is the closest match. If there is any ambiguity in the identifier matching process, then the load center mapping app 116 flags the ambiguity for manual resolution by the installer.

Once a slot number for a load center device 108 in the digital image is mapped to the extracted (or entered) identifier for the device, the load center mapping app 116 saves the mapping information to a virtual load center table (VLCT) created for the purpose. An exemplary virtual load center table for a residential dwelling like the home 104 is shown in Table 2 below. As can be seen, the virtual load center table (VLCT) includes a number for each of the slots in a given load center 102, the coordinates for the device located at each slot based on the contour line for each device, including upper left corner coordinates (xₙ, yₙ) and lower right corner coordinates (xₙ', yₙ'), any other device information that was extracted (e.g., number of poles, rating, etc.), and the extracted (or entered) identifier for the device. In Table 2, the subindex "n" for the device coordinates indicates a slot number for the load center device at those coordinates in the digital image.

**Table 2: Virtual Load Center Table (VLCT)**

| Slot # | Load Center Coordinates | Device Information | Extracted Identifier |
|---|---|---|---|
| 1 | (x₁, y₁), (x₁', y₁') | 1P, Rating C, etc. | "Bedroom" |
| 2 | (x₂, y₂), (x₂', y₂') | 2P, Rating A, etc. | "Kitchen" |
| 3 | (x₃, y₃), (x₃', y₃') | 1P, Rating B, etc. | "Bathroom" |
| ... | ... | | ... |
| 10 | (x₁₀, y₁₀), (x₁₀', y₁₀') | 1P, Rating A, etc. | "Game Room" |

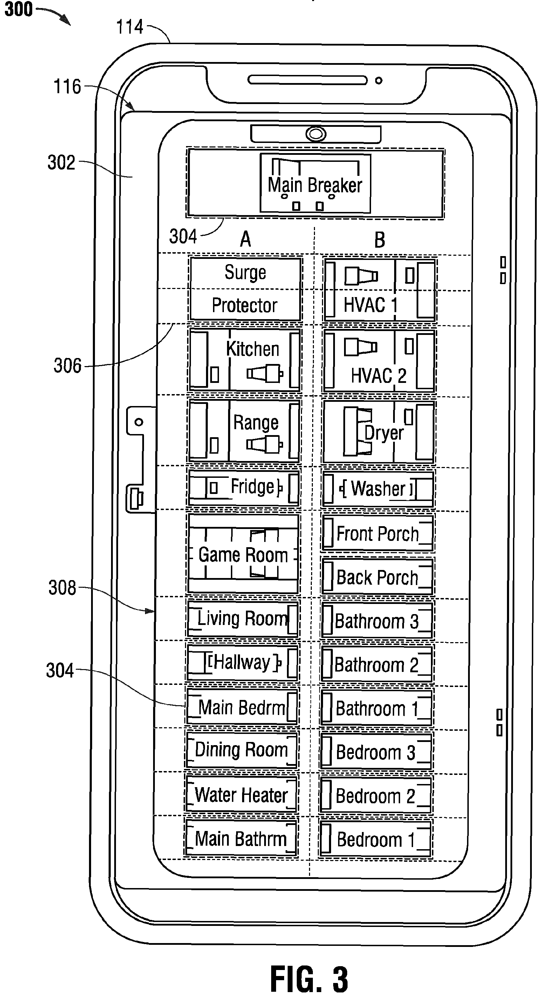

After the virtual load center table (VLCT) is filled in with a slot number and identifier for each load center device 108 in the digital image of the load center, the load center mapping app 116 uses the virtual load center table to generate and display on the mobile device 114 an augmented load center. The augmented load center, shown later in FIG. 3, is basically an augmented version of the digital image that is overlaid with the identifier for each device 108 in the image. In some embodiments, the slot number for each device 108 may also be overlaid on the digital image along with the identifier. Such an augmented load center provides the installer with a realistic view of the load center 102 that shows not only a real-world view of the actual installed devices 108, but also their identifiers and, in some embodiments, their slot numbers.

Some load center devices 108 may not have any labels or other indicia containing an identifier to indicate which branch is connected to the device, as in the case of most thermal-magnetic breakers, non-communicating electronic breakers, surge protectors, and similar devices. For these load center devices 108, the load center mapping app 116 prompts the installer to manually enter the identifiers for any remaining unmapped slot numbers using any unused identifiers in the installed devices table. This allows the load center mapping app 116 to complete the virtual the load center table so that the resulting augmented load center can be displayed with a complete set of identifiers on the mobile device 114. Alternatively, a predefined default identifier (e.g., "unassigned," "unused," etc.) may be used for any load center device 108 that cannot be identified through text recognition or otherwise, in some embodiments.

The option to prompt a user to manually enter an identifier is particularly useful in embodiments where there is no predefined installed devices table like Table 1 (or reference identifier list like List 1). In such embodiments, the load center mapping app 116 does not verify extracted identifiers against a predefined list of identifiers before populating the virtual load center table (VLCT) with the extracted identifiers, but simply populates the VLCT with the extracted identifiers. For any load center devices 108 that do not have a label or other indicia containing an identifier, the load center mapping app 116 prompts the installer to manually enter the identifiers, as mentioned above.

In some embodiments, the load center 102 and the mobile device 114 may be connected to an external system 120, such as a publicly available computing environment, or a private enterprise computing environment, or a combination of both. This may be done via a wireless connection 118, such as a Wi-Fi, cellular, or satellite connection, and the like. The load center mapping app 116 may then upload the virtual load center table (VLCT) and the augmented virtual load center image to the external system 120.

In some embodiments, the external system 120 may be a cloud computing environment. One or more computing resources may be hosted on the cloud computing environment 120, such as database resources, processor resources, memory resources, network resources, and the like. For example, the cloud computing environment 120 may host one or more installation and commissioning resources 122 that can be accessed and used by or with applications such as the eSetup app mentioned earlier. The cloud computing environment 120 may also host one or more energy usage monitoring resources 124 that can be accessed and used by or with applications such as the Wiser Monitor app mentioned earlier. An installer may then access these computing resources via an appropriate application to install and commission the load center devices 108. Similarly, a homeowner may access these computing resources via an appropriate application to monitor energy usage through the load center devices 108.

In some embodiments, the cloud computing environment 120 may further host one or more load center databases 126 and one or more load center device databases 128. The one or more load center databases 126 stores information on various load centers that may be installed in residential dwellings like the home 104. Such information may include specifications and images for various types of electrical panels, manufacturers and model numbers, wiring diagrams for installed devices in existing installations as well as planned installations and new projects, and similar load center information. The one or more load center device databases 128 stores similar information on various load center devices that may be installed in a load center for a residential dwelling like the home 104. Such information may include specifications and images for various types of circuit breakers, relays, surge protectors, manufacturer and model numbers, and the like. An installer may then access these databases 126, 128 via the load center mapping app 116 to facilitate automatic identification and slot location for the load center devices 108 as described herein.

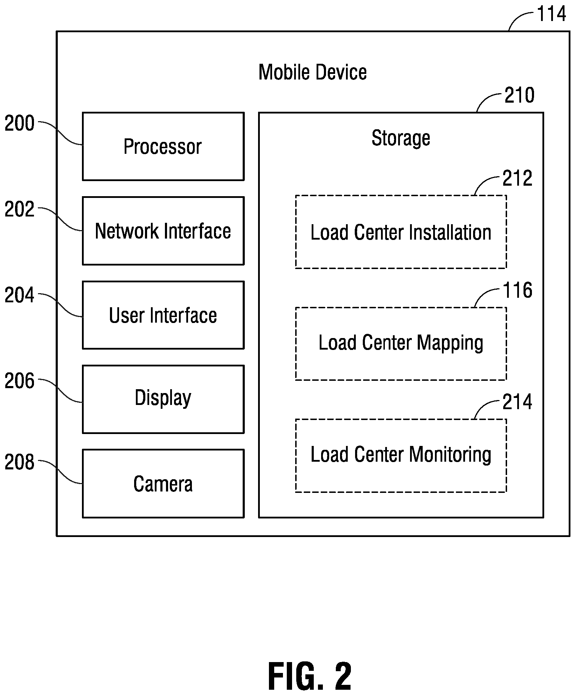

FIG. 2 depicts some of the functionality of the load center mapping app 116 running on the mobile device 114. The mobile device 114 in this example has a processing unit 200 that includes at least one processor, a network interface 202, a user interface 204, a display unit 206, a camera unit 208, and a storage unit 210, among other components. Operation of these components is generally well known and only a brief description is provided here for economy. In general, the processing unit 200 is responsible for overall operation of the mobile device 114, including complex image processing operations as well as less complex image capture and storage operations. The network interface 202 allows the mobile device 114 to communicate with external systems, including local systems like the load center devices 108, as well as network systems like the cloud computing environment 120. The user interface 204 allows an installer to use or otherwise interact with the mobile device 114 via the display unit 206. The display unit 206 displays graphics, images, videos, and other media content for the mobile device 114, and may be a basic display screen or a touchscreen. The camera unit 208 allows an installer to capture a digital image of the load center 102 and save the image for further processing, and may be a multi-frame-per-second camera in some embodiments. The storage unit 210 meanwhile stores operational software and data used by and with the processing unit 200 to perform the various operations mentioned above, and other functions.

The storage unit 210 in this example may be any non-transitory storage unit known to those skilled in the art, including volatile memory (e.g., RAM), nonvolatile memory (e.g., Flash), magnetic memory, optical memory, and the like. This storage unit 210 stores a plurality of apps thereon that may be run by the processing unit 200. These apps may include a load center installation app 212 similar to the eSetup app mentioned above that can be used to install and commission various load center devices 108. The apps may also include the load center mapping app 116 described earlier that can be used to automatically identify load center devices and their slot locations in a load center. The apps may further include a load center monitoring app 214 similar to the Wiser Monitor app mentioned above that can be used to monitor energy usage by the load center devices 108.

In some embodiments, the load center mapping app 116 may be used in conjunction with either the load center installation app 212 or the load center monitoring app 214, or both. In these embodiments, the load center mapping app 116 may communicate and exchange information directly with the apps 212, 214. In particular, the load center mapping app 116 may be used to automatically generate device identification and slot location information for the apps 212, 214 to use, as discussed later herein. Indeed in some embodiments, the load center mapping app 116 may be implemented as an integral functionality in either the load center installation app 212 or the load center monitoring app 214, or both.

FIG. 3 shows the mobile device 114 with the load center mapping app 116 thereon displaying an exemplary augmented load center 300. In the example shown, a digital image 302 of a load center like the load center 102 has been acquired and provided to the load center mapping app 116. In the image 302, the installer has completed installation and programming (i.e., commissioning) of all load center devices, and has put the front cover (dead cover) of the load center 102 back into place. As mentioned earlier, the digital image 302 may be captured using a built-in camera of the mobile device 114, or the image 302 may be downloaded to the mobile device 114 or otherwise obtained from an external source. In either case, once the digital image 302 has been provided to the load center mapping app 116, and image processing techniques such as a high-pass filter and an image edge-detection and matching algorithm are applied to the image 302 to detect the contours 304 of the devices therein in a manner known to those skilled in the art. Thereafter, the load center mapping app 116 overlays each load center device in the image 302 with a contour outline for the device.

After the contours 304 of the various devices have been outlined, the load center mapping app 116 generates a frame grid 306 (dotted lines) that defines a plurality of grid slots 308 corresponding to the contours 304. This frame grid or virtual grid 306 divides the load center into two columns, designated here as columns A and B, based on the device contours 304 in each column. In some embodiments, the image edge-detection and matching algorithm can use stock images of one or more load centers and one or more load center devices for visual comparison to facilitate the edge-detection and matching. These stock images may be provided by the manufacturers of the devices and the load center, and may be stored on the cloud computing environment 120 (e.g., load center database 126 and load center device database 128) for easy access. Selection of a device or a load center from the databases 126, 128 may be accomplished either manually by the installer or automatically by the load center mapping app 116 by entering the desired manufacturer and/or model number.

In some embodiments, if the digital image 302 is not vertically aligned, for example, because the camera used to capture the image was angled at the time the image was taken, then the load center mapping app 116 can automatically adjust the angle of the image 302. To perform this vertical angle adjustment, the load center mapping app 116 rotates the image by the appropriate degree of angle offset. The degree of angle offset can be computed using either the built-in orientation sensor (e.g., accelerometer, gyroscope, etc.) and functionality of the mobile device 114, or using a virtual vertical line defined with respect to an edge line detected by the image edge-detection algorithm. Other known image processing techniques may be used to achieve the vertical alignment, such as affine transformations.

Once the image 302 has been superimposed with the virtual grid 306 showing the grid slots 308 and the contour lines 304 over the load center devices, then the installer can review and save or otherwise accept the overlaid image for subsequent use. The load center mapping app 116 can thereafter run any further image processing algorithms as needed based on the saved augmented image.

In some embodiments, further processing of the image involves identifying the various load center devices according to the branches connected thereto for the devices in each column A and B. Once each load center device is identified, the load center mapping app 116 maps the identifier to a slot number in the load center corresponding to the grid slot 308 in the virtual grid 306 that contains the device. As mentioned, identifying the load center device entails performing text recognition to extract text from any label or other indicia containing an identifier on the load center device. The extracted text is then used to search for matching text in a predefined installed devices table like Table 1 (or reference identifier list like List 1) that lists the load center devices and their identifiers, including a full text string and an abbreviated text string. The predefined installed devices table may be prepared by the installer during installation of the load center, or it may be generated and stored ahead of time (e.g., by a different installer) for the installer to access and use. In either case, if the search finds a match between the extracted text for a device and either the full string or the abbreviated string, then the load center mapping app 116 maps the slot number for the device to that identifier.

The above sequence is repeated for each load center device from which text was extracted by the load center mapping app 116 via a label or other indicia containing an identifier for the device. If a load center device does not have a label or other indicia containing an identifier, then the load center mapping app 116 can query the installer to manually enter the identifier for the device. The load center mapping app 116 can perform the above process in real time, such that only a few seconds is required to auto-populate a virtual load center table like Table 2 with the identifier for each load center device. Once all devices have been identified and mapped to a slot number, the load center mapping app 116 can use this information to generate an overlay on the image 302 to thereby generate the augmented load center 300.

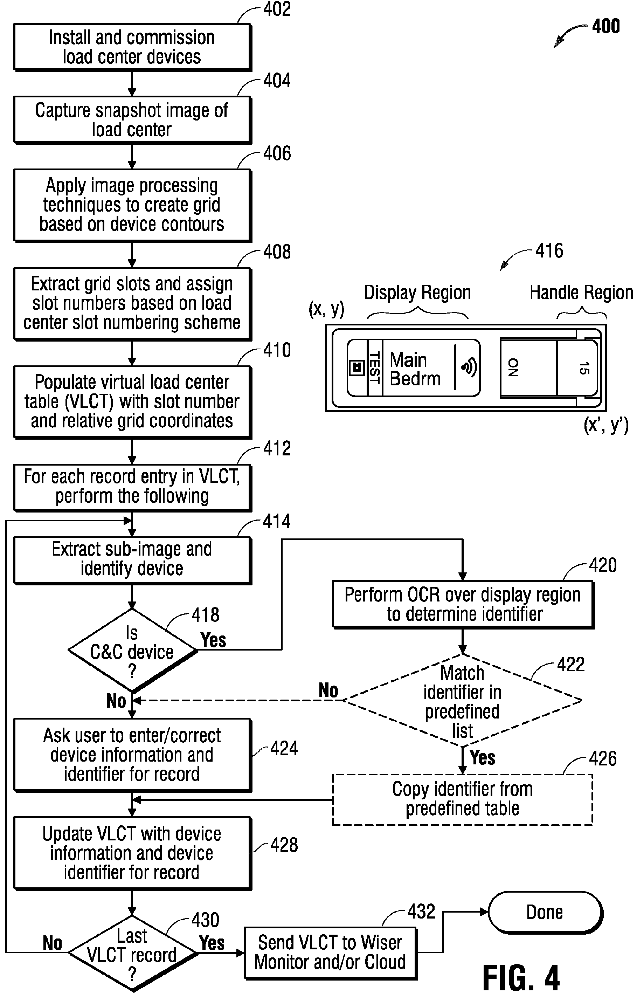

Following now in FIGS. 4-9 are flowcharts representing several methods that may be used to identify load center devices in a load center and map slot locations to the devices according to embodiments of the present disclosure.

Referring to FIG. 4, an exemplary flowchart 400 is shown representing an overall method that may be used by or with a load center mapping app similar to the load center mapping app 116 described herein. The flowchart 400 generally begins at block 402 where an installer installs and commissions load center devices in a load center of the type typically found in the home or other residential dwelling. As discussed previously, these load center devices may include circuit breakers, relays, surge protectors, and similar switching and/or protection devices commonly found in a load center. The circuit breakers themselves may include conventional circuit breakers, such as thermal-magnetic breakers, or they may be smart circuit breakers, such as communication and control (C&C) breakers that have electronic labels which can be programmed to display a branch name. In some embodiments, the installer may use a load center installation app such as eSetup to perform the installation and commissioning of the load center devices.

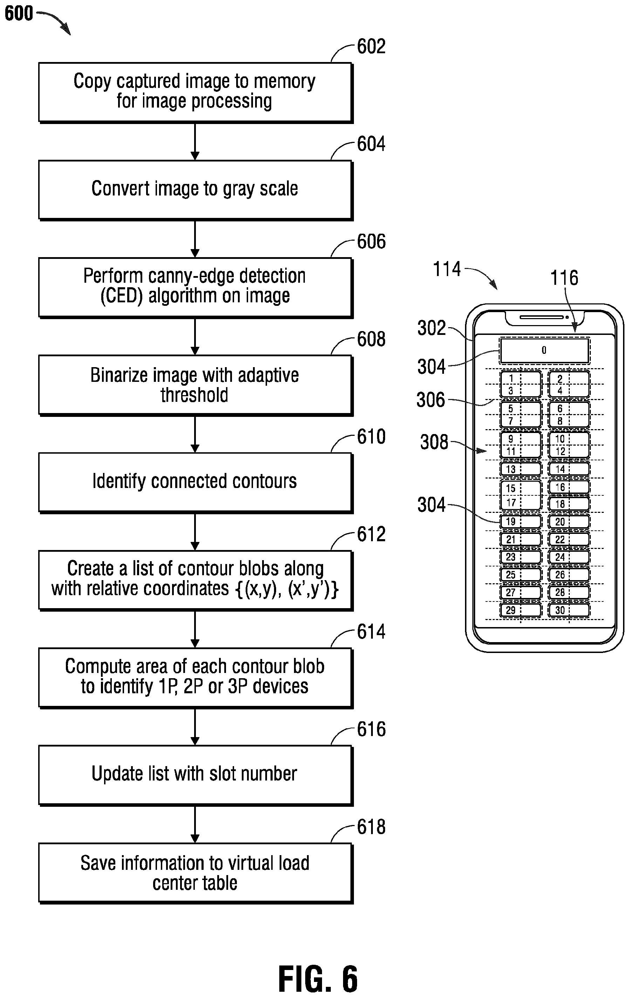

At block 404, the installer takes a snapshot image of the completed load center with the load center devices installed therein using the load center mapping app and the built-in camera of a mobile device on which the app is running, as detailed in FIG. 5. Alternatively, an image of the load center with the load center devices installed therein may be provided to the load center mapping app from an external source. At block 406, the load center mapping app applies a digital image processing algorithm or uses other image processing techniques to create a frame grid for the load center based on the device contours, as detailed with respect to FIG. 6.

At block 408, the load center mapping app extracts grid slots from the frame grid, then numbers each grid slot based on the slot numbering scheme for the particular load center being used. For example, in a dual column load center, the numbering scheme may use odd numbered slots on the left column and even numbered slots on the right column. In some embodiments, the particular load center being used may be determined during the previous block 406 at the same time that the load center mapping app processes the digital image of the load center. Alternatively, the installer may enter or otherwise specify the particular load center being used for the app. In either case, once the particular load center being used is determined, the load center mapping app may retrieve the slot numbering scheme for that load center, either from the internal storage unit of the mobile device, or by downloading the slot numbering scheme from a load center database on a cloud computing resource.

At block 410, the load center mapping app populates a virtual load center table (VLCT) similar to Table 2 above with the slot numbers derived from the previous block 408, along with the relative grid coordinates for the load center device installed at each slot. The load center mapping app thereafter fills in the extracted identifiers for the various rows or records of the virtual load center table (VLCT) at block 412. More specifically, at block 412, the load center mapping app performs the following for each row or record in the virtual load center table (VLCT).

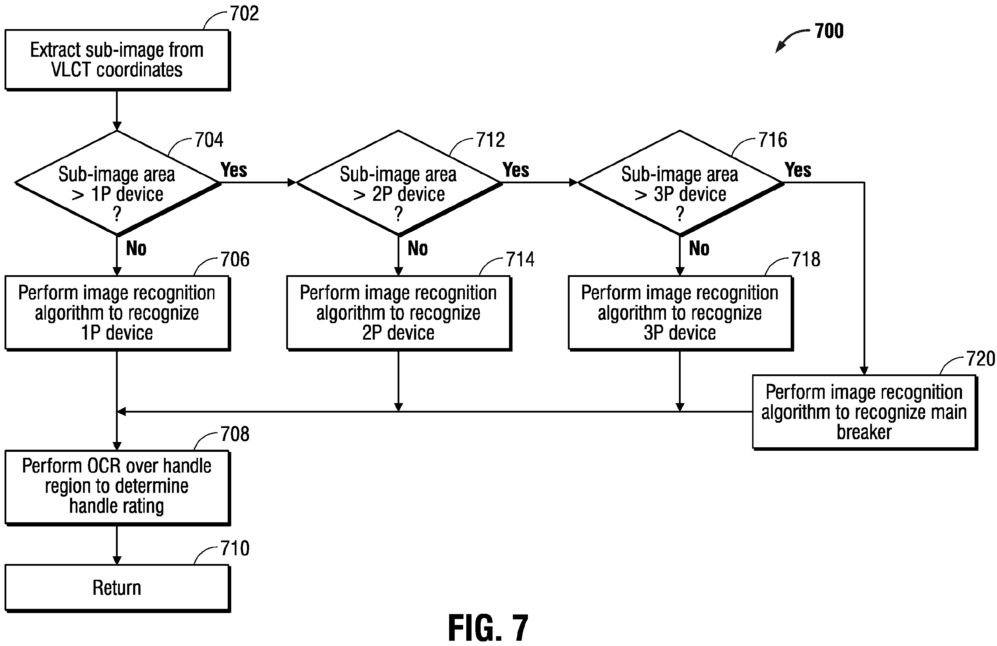

First, at block 414, the load center mapping app extracts a sub-image from the digital image, each sub-image containing a load center device based on the grid coordinates for each device. This is done to identify the device, as detailed in FIG. 7. An example of a sub-image is shown at 416 for a C&C circuit breaker device. At block 418, the load center mapping app makes a determination, based on the processing of the sub image, whether the load center device is a C&C circuit breaker. If the determination is yes, then at block 420, the load center mapping app applies text recognition (e.g., OCR) over a display region of the device in the sub image to extract an identifier for the device. Next, at an optional block 422, the load center mapping app tries to match the extracted identifier to an identifier in an installed devices table similar to Table 1 above, or in a predefined list of reference identifiers similar to List 1 above if no installed devices table similar to Table 1 exists. If there is no match, or if the determination at block 418 is no, then at block 424, the load center mapping app prompts the user to enter an identifier (and optionally other information) for the device.

If there is a match at optional block 422, then at block 426, the load center mapping app copies the identifier from predefined table and uses that identifier for the device. At block 428, the load center mapping app updates the virtual load center table (VLCT) with the extracted (or entered) information. At block 430, the load center mapping app determines whether the current record is the last record in the virtual load center table (VLCT). If the determination is no, then the load center mapping app returns to block 414 to repeat the process. If the determination is yes, then at block 432, the load center mapping app saves and sends the virtual load center table (VLCT) to an external system, such as the Wiser Monitor app and/or the cloud computing resource mentioned earlier.

FIG. 5 shows a flowchart 500 detailing block 404 from FIG. 4 in which a digital image of the load center is captured. The flowchart 500 generally begins at block 502 where a user uses the load center mapping app to enable the digital camera of the mobile device on which the load center mapping app is running. At block 504, the user uses the load center mapping app to capture a digital image of the load center with the various load center devices installed therein. At block 506, the load center mapping app uses available image processing techniques to extract the main contours around the load center devices in a known manner. This can be seen in the digital image 302 where main contour lines 508 and 510 have been drawn around the two columns of load center devices, columns A and B, and contour line 509 has been drawn around the main breaker. At block 512, the load center mapping app determines whether there are any device edges over the main contours. If the determination is no, then this means the image processing was not completed correctly. The image is cleared of any contour lines at block 520 so that only the original image shows, and the flowchart 500 returns to block 504 to capture a new image.

If the determination at block 508 is yes, then at block 514, the image processing was completed correctly, and the load center mapping app applies affine transformation or a similar transformation based on one or more MEMS (microelectromechanical systems) sensors in the mobile device (e.g., accelerometer, gyroscope, etc.) and the main contour lines to align the frame in the vertical direction. At block 516, the load center mapping app enhances the main contour lines 508, 510 around the load center devices and shows them on the display along with the original image. At 518, the load center mapping app saves the digital image and the main contour lines 508, 510.

FIG. 6 shows a flowchart 600 detailing block 406 from FIG. 4 in which the load center mapping app creates a frame grid for the load center. The load center mapping app uses the frame grid primarily as a reference to identify the slots in the load center device and assign slot numbers accordingly. The frame grid may or may not be visually displayed, depending on the particular implementation. The flow chart 600 generally begins at 602 where the load center mapping app copies a captured image to the memory of the mobile device for image processing. At block 604, the load center mapping app converts the image to grayscale, and at block 606, the load center mapping app performs canny-edge detection (CED) or a similar algorithm on the converted image to detect edges in the image. At block 608, the load center mapping app binarizes the image with an adaptive threshold in a known manner, and at block 610, the app identifies connected contours from which the frame grid will be drawn. Exemplary contours can be seen at 304 with slot numbers for each contour.

At block 612, the load center mapping app creates a list of blobs along with their relative coordinates, where (xₙ, yₙ) are the coordinates for the upper left corner of each contour blob, and (xₙ', yₙ') are the coordinates for the lower right corner of each contour blob. At block 614, the load center mapping app computes the area of each blob contour to determine whether the blob represents a load center device that is a 1-pole (1P), 2-pole (2P), or 3-pole (3P) device. The blob for a 3P device has a larger area than that of a 2P device, which in turn has a larger area than that of a 1P device. At block 616, the load center mapping app updates the list of blobs with slot number corresponding to each blob. It should be noted that 1P devices occupy a single slot in the load center, whereas 2P and 3P devices occupy two slots and three slots, respectively, in the load center.

FIG. 7 shows a flowchart 700 detailing block 414 from FIG. 4 in which the load center mapping app extracts a sub-image from the digital image to identify the device. The flowchart 700 generally begins at 702 where the load center mapping app extracts a sub-image from the digital image, each sub-image containing a load center device, based on the grid coordinates for the device. At 704, the load center mapping app makes a determination whether the sub-image area, determined previously at block 614 in FIG. 6, is greater than the area for a 1P device. If the determination is no, meaning the sub-image area contains a 1P device, then at block 706, the load center mapping app performs image recognition using a known image recognition algorithm to recognize the 1P device, for example, whether the device is a C&C breaker, a thermal-magnetic breaker, electronic breaker, C&C relays, or some other type of device. At block 708, the load center mapping app performs OCR recognition over the handle region (see FIG. 4) to determine the so-called handle rating, or current rating (e.g., 15 A), for the device.

If the determination at block 704 is yes, then at block 712, the load center mapping app makes a determination whether the sub-image is greater than the area for a 2P device. If the determination is no, meaning the sub-image area contains a 2P device, then at block 714, the load center mapping app performs image recognition using a known image recognition algorithm to recognize the 2P device in a similar manner as block 706. The flow diagram thereafter proceeds as described above at block 708.

If the determination at block 712 is yes, then at block 716, the load center mapping app makes a determination whether the sub-image is greater than the area for a 3P device. If the determination is no, meaning the sub-image area contains a 3P device, then at block 718, the load center mapping app performs image recognition using a known image recognition algorithm to recognize the 3P device in a similar manner as block 706. The flow diagram thereafter proceeds as described above at block 708.

If the determination at block 716 is yes, meaning the sub-image area contains a main breaker device, then at block 720, the load center mapping app performs image recognition using a known image recognition algorithm to recognize the main breaker device in a similar manner as block 706. The flow diagram thereafter proceeds as described above at block 708.

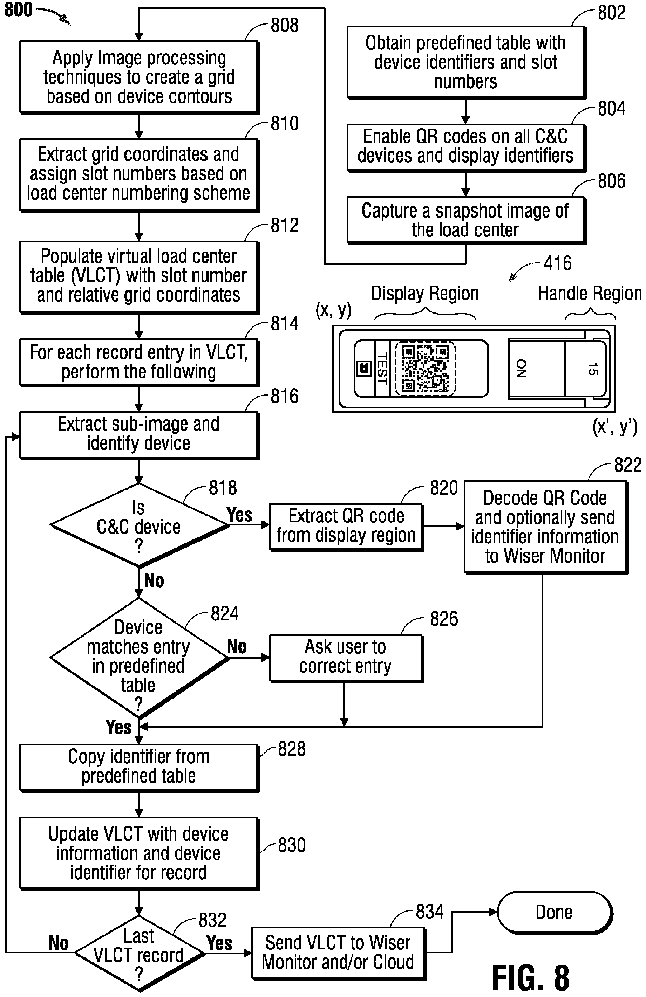

Referring to now FIG. 8, an exemplary flowchart 800 is shown representing another overall method that may be used by or with a load center mapping app similar to the load center mapping app 116 described herein. The method depicted here is particularly advantageous insofar as the various blocks shown in the flowchart 800 allows for fast commissioning of C&C devices automatically, without requiring the installer to commission each device one at a time. The method also allows for quick configuration of any load center devices connected to a network (e.g., wireless local network) via the load center mapping app as well as automatic updates to the Virtual Load Center Table. The installer does not need to scan one QR code at a time, but instead the QR codes may be decoded automatically for each corresponding slot and checked against a predefined table of load center devices similar to Table 1.

As can be seen, the flowchart 800 is similar to the flowchart 400 from FIG. 4 except for an additional ability to identify load center devices based on a coded identifier, such as a barcode or a QR (Quick Response) code. The flowchart 800 generally begins at block 802 where a predefined installed devices table having device identifiers and slot numbers therein similar to Table 1 above is obtained for the load center mapping app. At block 802, the device identifiers are displayed as a QR code for each load center device in the load center that is equipped with a display region that can display a QR code, such as C&C breakers. This can be done manually by the installer, or remotely via an installation and commissioning resource (e.g., installation and commissioning resources 122) in some embodiments.

At block 806, the installer takes a snapshot image of the load center with the load center devices installed therein using the load center mapping app and the built-in camera of a mobile device on which the app is running, as discussed above with respect to FIG. 5. Alternatively, an image of the load center with the load center devices installed therein may be provided to the load center mapping app from an external source. At block 808, the load center mapping app applies a digital image processing algorithm or uses other image processing techniques to create a frame grid for the load center based on the device contours, as discussed above in FIG. 6.

At block 810, the load center mapping app extracts grid coordinates and assign slot numbers based on load center numbering scheme in a similar manner to that described previously in FIG. 4. At block 812, the load center mapping app populates a virtual load center table (VLCT) similar to Table 2 above with the slot numbers derived from the previous block 810, along with the relative grid coordinates for the load center device installed at each slot. The load center mapping app thereafter fills in the extracted identifiers for the various rows or records of the virtual load center table (VLCT) at block 814. More specifically, at block 814, the load center mapping app performs the following for each row or record in the virtual load center table (VLCT).

First, at block 816, the load center mapping app extracts a sub-image from the digital image, each sub-image containing a load center device based on the grid coordinates for each device, as discussed previously in FIG. 7. An example of a sub-image is shown at 416 for a circuit breaker device. At block 818, the load center mapping app makes a determination, based on the processing of the sub-image, whether the load center device is a C&C circuit breaker. If the determination is yes, then at block 820, the load center mapping app extracts the QR code from the display region of the device, and decodes the QR code at block 822 to obtain an identifier for the device. In some embodiments, the load center mapping app may also send the decoded identifier information to an external system, such as the Wiser Monitor app. At block 828, the load center mapping app copies the corresponding identifier from the predefined install devices table, and updates the virtual load center table (VLCT) accordingly at block 830.

If the determination at block 818 is no, then at block 824, the load center mapping app tries to match the extracted identifier (handle rating and type of device) to an identifier in the installed devices table similar. If there is a match, then the load center mapping app proceeds to block 828, described above. If there is no match, then at block 826, the load center mapping app prompts the user to enter an identifier and other information for the device, and proceeds to block 828, described above. At block 830, the load center mapping app updates the virtual load center table (VLCT) with the extracted (or entered) information, slot location, branch label information, and potentially other information for the device. At block 832, the load center mapping app determines whether the current record is the last record in the virtual load center table (VLCT). If the determination is no, then the load center mapping app returns to block 816 to repeat the process. If the determination is yes, then at block 834, the load center mapping app saves and sends the virtual load center table (VLCT) to an external system, such as the Wiser Monitor app and/or the cloud computing resource mentioned earlier.

In some embodiments, the QR code (or other code) extracted and decoded above for each load center device may contain installation information for the installer to pair these devices within the load center with the Wiser Monitor app running on the mobile device. In that case, the identification of the device, installation, and branch label information can be handled at the same time by the installer using the Wiser Monitor app, which can save significant time. As an example, for duplicate or repeat residential load center installations where the load center is already predefined, the electrician or installer can install the entire load center very quickly, but he/she typically has not programmed the identifiers for the C&C breakers or relays yet, as that process takes more time. The uncommissioned C&C breakers and relays, by factory default, are set to display a QR code in their display areas that contains installation information, such as physical device specific information (e.g., MAC address, ZigBee EUI, manufacturing code, etc.), and the like.

Embodiments of the load center mapping app herein can automatically extract and decode the QR codes for the devices in the load center based on an image of the load center. The load center mapping app can then communicate the decoded information from QR codes for the devices in the load center to the Wiser Monitor app via an appropriate device-based application programming interface (API) rather than having the installer provide the QR code for each device. The Wiser Monitor app can then use the information contained in the QR code to create a local network for the devices within the load center (e.g., a PAN (personal area network), etc.), and also program the devices with their predefined branch labels and confirm their predefined slot locations in the load center. As mentioned earlier, the load center mapping app can also communicate the decoded QR codes for the load center devices to the cloud or other external system via an appropriate web-based API.

The above arrangement allows an installer to perform device identification and location in predefined load center installations much more quickly by using a snapshot image of the load center and a prepopulated table. Multiple predefined load centers may be installed and commissioned in parallel merely by installers using their mobile devices and the load center mapping app thereon. This can be achieved because the load center mapping app can automatically extract and decode the QR codes for the C&C devices in each load center based on an image of the load center, and provide the decoded QR codes to the Wiser Monitor app. Thus, a process that typically takes an installer 10 or more minutes to perform can now be completed in less than a minute and as little as a few seconds in some cases using the load center mapping app herein.

While a number of embodiments have been disclosed and described herein, it is to be understood that the above description is intended to be illustrative, and not restrictive. Many other implementation examples are apparent upon reading and understanding the above description and modifications and variations may be made within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An electronic device for generating an augmented load center, the electronic device comprising:
a processor;
a display unit coupled to the processor; and
a storage unit accessible by the processor, the storage unit storing computer-readable instructions thereon that, when executed by the processor, cause the processor to:
obtain a digital image of a load center having load center devices installed in the load center, the digital image of the load center showing the load center devices located within slots in the load center;
process the digital image of the load center to recognize individual load center devices located within the slots of the load center;
process each recognized load center device in the digital image to extract an identifier for the recognized load center device; and
display on the display unit an augmented image of the load center showing the load center devices located within the slots in the load center, the augmented image overlaying each load center device with the identifier for the load center device.

2. The electronic device of claim 1, wherein the computer-readable instructions cause the processor to recognize individual load center devices by applying an image edge-detection and matching algorithm to detect a contour of the individual load center devices.

3. The electronic device of claim 2, wherein the computer-readable instructions further cause the processor to recognize individual load center devices by creating a frame grid for the load center based on the contour of the individual load center devices.

4. The electronic device of claim 1, wherein the computer-readable instructions further cause the processor to find a match between the identifier extracted for the recognized device and a set of predefined identifiers.

5. The electronic device of claim 1, wherein the computer-readable instructions cause the processor to extract the identifier for the recognized load center device by reading a coded identifier for the recognized load center device, the coded identifier including a barcode or a QR (Quick Response) code.

6. The electronic device of claim 5, wherein the computer-readable instructions cause the processor to communicate the barcode or the QR code to a load center installation and commissioning application running on the electronic device, the load center installation and commissioning application configured to program the load center device based on the information contained in the barcode or the QR code.

7. The electronic device of claim 1, wherein the computer-readable instructions cause the processor to prompt a user to manually enter an identifier for any load center devices for which an identifier was not extracted.

8. A method of generating an augmented load center in an electronic device, the method comprising:
obtaining a digital image of a load center having load center devices installed in the load center, the digital image of the load center showing the load center devices located within slots in the load center;
processing the digital image of the load center to recognize individual load center devices located within the slots of the load center;
processing each recognized load center device in the digital image to extract an identifier for the recognized load center device; and
displaying an augmented image of the load center showing the load center devices located within the slots in the load center, the augmented image overlaying each load center device with the identifier for the load center device.

9. The method of claim 8, wherein processing the digital image to recognize individual load center devices comprises applying an image edge-detection and matching algorithm to detect a contour of the individual load center devices.

10. The method of claim 9, wherein processing the digital image to recognize individual load center devices comprises creating a frame grid for the load center based on the contour of the individual load center devices.

11. The method of claim 8, further comprising finding a match between the identifier extracted for the recognized device and a set of predefined identifiers.

12. The method of claim 8, wherein processing the digital image to extract the identifier for the recognized load center device comprises reading a coded identifier for the recognized load center device, the coded identifier including a barcode or a QR (Quick Response) code.

13. The method of claim 8, further comprising communicating the barcode or the QR code to a load center installation and commissioning application running on the electronic device, the load center installation and commissioning application configured to program the load center device based on the information contained in the barcode or the QR code.

14. The method of claim 8, further comprising prompting a user to manually enter an identifier for any load center devices for which an identifier was not extracted.

15. A system for generating an augmented load center, the system comprising:
an external system, the external system hosting at least one of an installation and commissioning resource and/or an energy usage monitoring resource;
a load center having load center devices installed therein, the load center devices located within slots in the load center, the load center devices communicatively coupled to the external system; and
an electronic device communicatively coupled to the external system, the electronic device configured to access at least one of the installation and commissioning resource and/or the energy usage monitoring resource, the electronic device further configured to:
obtain a digital image of a load center having load center devices installed in the load center, the digital image of the load center showing the load center devices installed within slots in the load center;
process the digital image of the load center to recognize individual load center devices located within the slots of the load center;
process each recognized load center device in the digital image to extract an identifier for the recognized load center device;
display on the display unit an augmented image of the load center showing the load center devices located within the slots in the load center, the augmented image overlaying each load center device with the identifier for the load center device; and
communicate the augmented image of the load center and the identifier for each load center device to the at least one of the installation and commissioning resource and/or the energy usage monitoring resource.

16. The system of claim 15, wherein the electronic device is further configured to process the digital image of the load center to recognize the load center and determine a numbering scheme of the load center.

17. The system of claim 16, wherein the electronic device is configured to recognize individual load center devices by creating a frame grid for the load center based on the contour of the individual load center devices.

18. The system of claim 15, wherein the electronic device is further configured to find a match between the identifier extracted for the recognized device and a set of predefined identifiers.

19. The system of claim 15, wherein the electronic device is further configured to extract the identifier for the recognized load center device by reading a coded identifier for the recognized load center device, the coded identifier including a barcode or a QR (Quick Response) code.

20. The system of claim 19, wherein the electronic device is configured communicate the barcode or the QR code to a load center installation and commissioning application running on the electronic device, the load center installation and commissioning application configured to program the load center device based on the information contained in the barcode or the QR code.
